# EUROPEAN PATENT APPLICATION

(11) **EP 4 491 035 A1**
(43) Date of publication of application: **15.01.2025**
(21) Application number: 23766670.6
(22) Date of filing: 01.03.2023
(51) Int. Cl.: A23L 15/00, A23L 19/00, A23L 29/256

(54) **PRODUCTION METHOD OF EGG-LIKE FOOD, AND EGG-LIKE FOOD**

(30) Priority: 08.03.2022 JP 2022035660; 13.12.2022 JP 2022198505
(71) Applicant: Two Inc., Tokyo 150-0012 (JP); Kagome Co., Ltd., Nagoya-shi, Aichi 460-0003 (JP)
(72) Inventor: SUZUKI, Keita, Tokyo 150-0012 (JP); KUZUHARA, Daishi, Tokyo 103-0014 (JP)
(74) Representative: Plasseraud IP
(86) International application number: PCT/JP2023/007568
(87) International publication number: WO 2023/171494

(57) **Abstract**

A production method of an egg-like food is provided, including a step (A) of obtaining a gel-like material by mixing a liquid preparation containing alginic acids and a calcium salt aqueous solution and gelling the mixture, in which a concentration of the alginic acids is in a range of 0.1% to 10.0% by mass with respect to the liquid preparation, and a concentration of the calcium salt aqueous solution is in a range of 0.1% to 5.0% by mass.

## Description

### [Technical Field]

The present invention relates to a production method of an egg-like food and an egg-like food.

Priority is claimed on Japanese Patent Application No. 2022-035660, filed March 8, 2022 and priority is claimed on Japanese Patent Application No. 2022-198505, filed December 13, 2022, the contents of which are incorporated herein by reference.

### [Background Art]

Egg dishes such as fried eggs and scrambled eggs are widely known cooked and processed foods provided in homes, the food service industry, food retail stores, and the like, and are consumed. On the other hand, since eggs, which are animal products, have a strong power to cause allergies, people with egg allergies must avoid eggs in foods as much as possible. In addition, since eggs contain a large amount of cholesterol, consumers interested in health desire foods with reduced cholesterol. In view of such circumstances, the demand for egg-like foods that reproduce the taste, the texture, and the like of eggs without using eggs or by reducing the amount of eggs used as much as possible has been increasing year by year.

Patent Document 1 discloses an egg-like baked and coagulated food that can be produced by the same method as that of an egg-like baked and coagulated food such as normal fried eggs or scrambled eggs without using the whole egg at all or by preparing a liquid batter containing a thermally coagulable plant protein material and soy cream and baking the liquid batter in accordance with a cooking step used to prepare a normal egg-like baked and coagulated food so that the baked food can be substituted with whole egg at a large proportion.

Patent Document 2 discloses that an egg white-like food material with the taste and texture similar to those of natural egg white can be obtained by adding an edible oil to a swollen gel obtained by stirring a curdlan to be gelled in the presence of an emulsifier, stirring the mixture, further adding an alginate and a calcium salt having a slow-acting property, stirring the mixture, and performing a deaeration treatment and a heat treatment on the mixture.

Patent Document 3 discloses a production method of a scrambled egg-like food obtained by mixing a starchy vegetable or a starch cell with a protein paste and heating the mixture.

### [Citation List]

### [Patent Documents]

[Patent Document 1]
   Japanese Unexamined Patent Application, First Publication No. 2017-169488
[Patent Document 2]
   Japanese Unexamined Patent Application, First Publication No. 2009-136247
[Patent Document 3]
   Japanese Unexamined Patent Application, First Publication No. 2002-119260

### [Summary of Invention]

### [Technical Problem]

However, the egg-like food obtained by the method disclosed in the above-described Patent Documents 1 to 3 cannot be said to be satisfactory in terms of the color, the flavor, the texture, and the like compared with egg foods using real chicken eggs. In particular, among egg foods, scrambled eggs have characteristics of the texture, the feeling of food passing the throat, the flavor, the color, especially the softness, the half-raw feeling, and the viscosity, but it is not easy to obtain such texture in egg-like foods using no eggs.

In view of the above-described circumstances, an object of the present invention is to provide a production method of an egg-like food that can reproduce the same texture as that of a real egg by significantly reducing the amount of eggs used or without using eggs at all.

### [Solution to Problem]

As a result of intensive examination, the present inventors have found that the above-described problems can be solved, in a step of obtaining a gel-like material by mixing a liquid preparation containing alginic acids and a calcium salt aqueous solution and gelling the mixture, by adjusting the concentration of the alginic acids and the concentration of the calcium salt to be in an appropriate range, thereby completing the present invention.

That is, the present invention is as follows.
[1] A production method of an egg-like food, including: a step (A) of obtaining a gel-like material by mixing a liquid preparation containing alginic acids and a calcium salt aqueous solution and gelling the mixture, in which a concentration of the alginic acids is in a range of 0.1% to 10.0% by mass with respect to the liquid preparation, and a concentration of the calcium salt aqueous solution is in a range of 0.1% to 5.0% by mass.
[2] The production method of an egg-like food according to [1], in which the calcium salt aqueous solution is gradually added to the liquid preparation containing the alginic acids.
[3] The production method of an egg-like food according to [1] or [2], in which the alginic acids are any one or more selected from the group consisting of sodium alginate, potassium alginate, and ammonium alginate.
[4] The production method of an egg-like food according to any one of [1] to [3], in which the calcium salt is any one or more selected from the group consisting of calcium lactate, calcium gluconate, calcium fumarate, calcium citrate, calcium succinate, calcium acetate, calcium chloride, and calcium hydroxide.
[5] The production method of an egg-like food according to any one of [1] to [4], further including: a step (B) of adding a plant oil and a vegetable-derived raw material to the liquid preparation and emulsifying the liquid preparation.
[6] The production method of an egg-like food according to [5], in which the plant oil are any one or more selected from the group consisting of linseed oil, perilla oil, olive oil, grape seed oil, corn oil, sesame oil, rice oil, soybean oil, rapeseed oil, palm oil, sunflower oil, safflower oil, and cottonseed oil.
[7] The production method of an egg-like food according to [5] or [6], in which the vegetable-derived raw material is a processed product of a carotenoid-containing plant.
[8] The production method of an egg-like food according to [7], in which the carotenoid-containing plant is any one or more selected from the group consisting of carrot, pumpkin, paprika, citrus, and mango.
[9] The production method of an egg-like food according to [7], in which the processed product of the carotenoid-containing plant is any one or more selected from the group consisting of carrot juice, concentrated carrot juice, carrot pulp, and carrot puree.
[10] The production method of an egg-like food according to any one of [1] to [9], further including: a step (C) of mixing the gel-like material obtained in the step (A) and an egg yolk-like liquid.
[11] The production method of an egg-like food according to [10], in which the egg yolk-like liquid contains a plant oil and a vegetable-derived raw material.
[12] The production method of an egg-like food according to [10] or [11], in which a mixing ratio of the gel-like material and the egg yolk-like liquid is in a range of 0.1: 1 to 10:1 (mass ratio).
[13] The production method of an egg-like food according to any one of [1] to [12], in which the egg-like food is a scrambled egg-like food.
[14] An egg-like food including: alginic acids; and calcium; in which the egg-like food has a portion gelled by the alginic acids and the calcium.
[15] The egg-like food according to [14], further including: a plant oil; and a vegetable-derived raw material.
[16] The egg-like food according to [15], in which the vegetable-derived raw material is emulsified with the plant oil.
[17] The egg-like food according to [15] or [16], in which the plant oil are any one or more selected from the group consisting of linseed oil, perilla oil, olive oil, grape seed oil, corn oil, sesame oil, rice oil, soybean oil, rapeseed oil, palm oil, sunflower oil, safflower oil, and cottonseed oil.
[18] The egg-like food according to any one of [15] to [17], in which the vegetable-derived raw material is a processed product of a carotenoid-containing plant.
[19] The egg-like food according to [18], in which the processed product of the carotenoid-containing plant is any one or more selected from the group consisting of carrot juice, concentrated carrot juice, carrot pulp, and carrot puree.

### [Advantageous Effects of Invention]

According to the present invention, it is possible to provide a production method of an egg-like food that can reproduce the same texture as that of a real egg by significantly reducing the amount of eggs used or without using eggs at all, and an egg-like food.

### [Description of Embodiments]

Hereinafter, a mode for carrying out the present invention (hereinafter, referred to as "present embodiment") will be described in detail. Further, the present invention is not limited to the present embodiments, and can be variously modified and implemented within the scope of the gist.

### [Production method of egg-like food]

A production method of an egg-like food according to the present embodiment is a method including a step (A) of obtaining a gel-like material by mixing a liquid preparation containing alginic acids and a calcium salt aqueous solution and gelling the mixture, in which the concentration of the alginic acids is in a range of 0.1% to 10.0% by mass with respect to the liquid preparation, and the concentration of the calcium salt aqueous solution is in a range of 0.1% to 5.0% by mass.

In the present embodiment, "egg-like food" denotes a food in which a part or the entirety of a raw egg material in an egg food is replaced with a plant-derived raw material, and examples thereof include egg-like foods having various shapes such as a hot spring egg-like food, a fried egg-like food, an omelet-like food, a boiled egg-like food, and a scrambled egg-like food. Among these, since the same tint, flavor, and texture as in a case where a real egg is used tend to be obtained by the production method according to the present embodiment, a scrambled egg-like food is preferable as the egg-like food.

<Step (A)>

The present inventors have found that in a case where a production method of an egg-like food includes a step of mixing a liquid preparation containing alginic acids and a calcium salt aqueous solution and gelling the mixture to obtain a gel-like material, and the concentration of the alginic acids with respect to the gel-like material and the concentration of the calcium salt aqueous solution in the step are adjusted to be in a suitable range, an egg-like food having a texture extremely similar to or the same as that of an egg food using a real chicken egg can be obtained.

In step (A), the concentration of the alginic acids is in a range of 0.1% to 10.0% by mass with respect to the liquid preparation. In a case where the concentration of the alginic acids is in a range of 0.1% to 10.0% by mass with respect to the liquid preparation, the gel is not extremely soft or hard, and a texture close to that of a real egg can be imparted to the egg-like food finally obtained. Here, the concentration of the alginic acids is a value calculated from the amount of raw materials used in a case of producing the liquid preparation. The concentration of the alginic acids may be 0.2% to 5.0% by mass, 0.3% to 3.0% by mass, 0.4% to 3.0% by mass, 0.6% to 3.0% by mass, or 0.5% to 1.5% by mass, preferably 0.5% to 1.2% by mass, more preferably 0.5% to 1.0% by mass, and particularly preferably 0.6% to 0.7% by mass with respect to the liquid preparation. In a case where the concentration of the alginic acids is in the above-described preferable ranges with respect to the liquid preparation, an excellent texture similar to a case where a real egg is used tends to be obtained particularly in a case of a scrambled egg-like food.

In step (A), the concentration of the calcium salt aqueous solution is in a range of 0.1% to 5.0% by mass. The concentration thereof is preferably in a range of 0.5% to 5.0% by mass. Further, the concentration thereof is more preferably in a range of 0.7% to 5.0% by mass. In a case where the concentration of the calcium salt aqueous solution is less than 0.1% by mass, the gelation reaction speed is low and thus there is a tendency that the mixture is not sufficiently gelled. Further, in a case where the concentration of the calcium salt aqueous solution is more than 5.0% by mass, the reaction speed is high and thus there is a tendency that the mixture is gelled and solidified before the mixture is stirred. The concentration of the calcium salt aqueous solution may be 0.3% to 3.0% by mass, 0.3% to 2.0% by mass, preferably 0.4% to 1.0% by mass, more preferably 0.4% to 0.8% by mass, and particularly preferably 0.5% to 0.6% by mass. In a case where the concentration of the calcium salt aqueous solution is within the above-described preferable ranges, an excellent texture similar to a case of using a real egg can be obtained particularly in a case of a scrambled egg-like food.

A method of mixing the liquid preparation containing alginic acids and the calcium salt aqueous solution is not particularly limited, and the calcium salt aqueous solution may be added to the liquid preparation containing alginic acids, or the liquid preparation containing alginic acids may be added to the calcium salt aqueous solution. Among these, it is preferable that the calcium salt aqueous solution be added gradually to the liquid preparation containing the alginic acids from the viewpoint that the gelation degree is easily adjusted according to the desired texture of the egg-like food.

The alginic acid is not particularly limited, and examples thereof include any one or more selected from the group consisting of sodium alginate, potassium alginate, and ammonium alginate. The above-described alginic acid group is water-soluble and is frequently utilized in foods. Further, among these, sodium alginate is more preferable.

The calcium salt is not particularly limited, and examples thereof include any one or more selected from the group consisting of calcium lactate, calcium gluconate, calcium fumarate, calcium citrate, calcium succinate, calcium acetate, calcium chloride, and calcium hydroxide. Among these, calcium lactate is more preferable.

### <Step (B)>

The production method of an egg-like food according to the present embodiment may further include a step (B) of adding a plant oil and a vegetable-derived raw material to the liquid preparation containing alginic acids and emulsifying the mixture.

By adding a plant oil and a vegetable-derived raw material to the liquid preparation in step (A) and emulsifying the mixture, an egg-like food having a flavor and a tint extremely similar to or the same as those of a real egg food can be obtained. Here, the concept of tint includes the color tone such as the brightness, the hue, or the chroma saturation.

The timing of adding the plant oil and the vegetable-derived raw material to the liquid preparation is not particularly limited, and may be before, after, or simultaneously with the addition of the alginic acids.

The emulsified state after the mixture is emulsified in step (B) is preferably an oil-in-water type (hereinafter, also referred to as "O/W type"). A method of emulsification is not particularly limited, and examples thereof include a high-pressure treatment, a grinding treatment, a mixing treatment, and a milling treatment.

### <Plant oil>

The plant oil are not particularly limited, and examples thereof include one or more selected from the group consisting of linseed oil, perilla oil, olive oil, grape seed oil, corn oil, sesame oil, rice oil, soybean oil, rapeseed oil, palm oil, sunflower oil, safflower oil, and cottonseed oil. Among these, a oil having a minimal flavor of oil is preferable, rapeseed oil, sunflower oil, safflower oil, or cottonseed oil is more preferable, and rapeseed oil is particularly preferable.

The content of the plant oil in the liquid preparation is not particularly limited, but is preferably 4% to 15% by mass, more preferably 6% to 10% by mass, and still more preferably 6% to 8% by mass. In a case where the content of the plant oil in the liquid preparation is 15% by mass or less, there is a tendency that separation without emulsification can be avoided. Further, in a case where the content thereof is 4% by mass or more, the hue tends to shift from orange to egg.

### <Vegetable-derived raw material>

The vegetable-derived raw material is not particularly limited, and any one or more selected from the group consisting of a processed product of a carotenoid-containing plant and a processed grain product are preferable.

### (Processed product of carotenoid-containing plant)

The carotenoid-containing plant is a plant containing carotenoids. The carotenoid is a yellow, orange, or red dye that is widely present in animals and plants. The carotenoid-containing plant is preferably a β-carotene-containing plant. In addition, in the present embodiment, from the viewpoint of the flavor and the tint of the egg-like food to be finally obtained, the carotenoid-containing plant is preferably one or more selected from the group consisting of carrot, pumpkin, paprika, citrus, and mango. As the citrus fruit, orange or tangerine is particularly preferable.

The processed product of the carotenoid-containing plant is a processed product using a carotenoid-containing plant as a raw material. The form of the processed product is not particularly limited, and examples thereof include juice, juice pulp, concentrated juice, dried powder, and puree.

As the processed product of the carotenoid-containing plant, from the viewpoint of the flavor and the tint of the egg-like food to be finally obtained, a carrot processed product is preferable, and among these, carrot juice, concentrated carrot juice, carrot pulp, or carrot puree is more preferable. The carrot juice is a juice obtained by crushing carrots, squeezing or pureeing the crushed carrots, and removing a part or the entirety of the pulp content. In addition, the concentrated carrot juice is a concentrated juice obtained by concentrating carrot juice. The concentrated carrot juice after being diluted and returned to a juice state is also referred to as carrot juice. The carrot puree is in a semi-liquid state obtained by crushing carrots and pureeing the crushed carrots to make the resultant smooth.

In the present embodiment, the carrot processed product used as a raw material is preferably a processed product of a yellow carrot or a processed product of an orange carrot.

### (Grain processed product)

The grain processed product in the present embodiment is processed grains. The grains include plants of the family Poaceae and plants of the family Fabaceae, and examples thereof include rice, wheat, barley, oats, soybeans, peas, kidney beans, broad beans, chickpeas, lentils, millet, barnyard millet, and Panicum miliaceum.

The grain processed product is preferably a grain juice or a puree. Examples of the grain processed product include kidney bean puree, pea protein, tofu, and soy milk.

The purpose of using the grain processed product in the production method according to the present embodiment is to adjust the color tone of the egg-like food to be finally obtained and particularly to adjust the brightness. The grain processed product having a white color tint can change the brightness or chroma saturation of the liquid preparation by being mixed with other food raw materials, and thus a bright color tone can be obtained. From this viewpoint, the grains of the grain processed product are preferably rice, wheat, oats, soybeans, white kidney beans, and the like, which have a white color tone.

The lower limit of the content of the grain processed product in the egg-like food according to the present embodiment is preferably 2% by mass and more preferably 3% by mass, and the upper limit thereof is preferably 20% by mass and more preferably 10% by mass. In addition, the plant raw material such as a grain processed product may contain a protein, but the protein content in the egg-like food according to the present embodiment is preferably 3.0% by weight or less. The protein content thereof is more preferably 2.0% by weight or less.

The vegetable of the vegetable-derived raw material may include, in addition to the above-described carotenoid-containing plants and grains, tomato, turnip, radish, spinach, green pepper, asparagus, green barley, garland chrysanthemum, Brassica juncea, salad vegetable, Japanese mustard spinach, angelica keiskei, sweet potatoes, potatoes, molokhiyya, paprika, parsley, celery, mitsuba, lettuce, radish, perilla, eggplants, kidney beans, pumpkins, burdock, leek, ginger, garlic, garlic chives, sweet corn, snow peas, okra, turnip, cucumber, melon, zucchini, loofah, and bean sprouts. Further, the vegetable-derived raw materials may further include citrus fruits such as lemons, oranges, navel oranges, grapefruits, mandarins, limes, sudachi, yuzu, citrus depressa, and tankan, and fruit-derived raw materials such as apples, Japanese ume, peaches, cherries, apricot, plum, prune, Myrciaria dubia, pears, European pears, loquat, strawberries, raspberries, blackberries, cassis, cranberries, blueberries, melons, watermelons, kiwi fruits, pomegranate, grapes, bananas, guava, acerola, pineapples, mangos, passion fruits, and lychee.

### <Step (C)>

The production method of an egg-like food according to the present embodiment may further include a step (C) of mixing the gel-like material obtained in step (A) and an egg yolk-like liquid.

### <Egg yolk-like liquid>

The egg yolk-like liquid according to the present embodiment is a liquid preparation to which the egg yolk-like tint and richness are imparted, and is not particularly limited. The egg yolk-like liquid may be the same as the above-described liquid preparation before being mixed with the calcium salt aqueous solution in step (A), and a liquid preparation in which the content ratio of each component is different from that of the liquid preparation in step (A) may be used as the egg yolk-like liquid, but the egg yolk-like liquid is preferably a liquid preparation containing a plant oil and a vegetable-derived raw material and more preferably a liquid preparation emulsified with a plant oil.

In step (C), the mixing ratio between the gel-like material and the egg yolk-like liquid is not particularly limited, but is preferably 1:1 to 10:1, more preferably 1:1 to 7:1, still more preferably 1:2 to 5:1, and particularly preferably 1:3 to 4:1 in terms of the mass ratio of the gel-like material to the egg yolk-like liquid. In a case where the ratio of the egg yolk-like liquid is smaller than the above-described ranges, the egg yolk-like liquid tends not to be able to be wrapped around the gel-like material obtained in step (A) in a clean manner, and in a case where the ratio of the egg yolk-like liquid is larger than the above-described ranges, the amount of liquid is large and the texture of the egg-like food tends to be impaired.

The production method of an egg-like food according to the present embodiment may include a heating step and a filling step in addition to steps (A) to (C) described above.

The heating step is performed, for example, for the purpose of sterilizing the liquid preparation or promoting gelation thereof. A heating method is not particularly limited, and examples thereof include a plate-type sterilization method and a tubular-type sterilization method.

A filling method in the filling step may be a known method. In addition, a known container can be used as the container filled (packed) with the present egg-like food, and examples thereof include a vinyl container, a can, a bottle, a paper container, and a PET container.

### [Egg-like food]

The egg-like food in the present embodiment contains alginic acids and calcium and has a portion gelled by the alginic acids and the calcium. Here, the alginic acids are the same as described above.

In addition, the egg-like food in the present embodiment may further contain a plant oil and a vegetable-derived raw material. Here, the plant oil and the vegetable-derived raw material are the same as described above. The vegetable-derived raw material is preferably emulsified with a plant oil, and thus tends to be able to reproduce the same tint and flavor as in a case where a real egg is used.

The egg-like food in the present embodiment may partially contain chicken eggs. However, from the viewpoint of not using animal raw materials as much as possible, the mass proportion of the real egg contained in the present egg-like food is preferably 50% by mass or less, more preferably 20% by mass or less, still more preferably 10% by mass or less, and particularly preferably 0% by mass.

The egg-like food may contain a seasoning, and examples of the seasoning include sugar, edible vinegar, mirin, soy sauce, Worcestershire sauce, salt, a flavor enhancer, a yeast extract, and a meat extract. From the viewpoint of not using animal raw materials, it is preferable not to use animal raw materials such as meat extract and fish extract. In addition, in order to avoid artificial taste, it is preferable not to use a flavor enhancer.

Various additives may be appropriately added to the egg-like food. The additives are generally added to foods and drinks and examples thereof include a sweetener, an acidifier, a coloring material, a pH adjuster, an antioxidant, a flavoring agent, a thickener, a coagulant, and an emulsifier.

The thickener is an agent used to increase the viscosity of the object. The coagulant is an agent used to coagulate an object. The thickener or coagulant that can be used in the present egg-like food in addition to the above-described components is not particularly limited, and examples thereof include pectin, agar, starch, modified starch, carrageenan, guar gum, locust bean gum, xanthan gum, galactomannan, gum arabic, cellulose, gelatin, and curdlan.

The above-described seasonings or additives may be used in any of steps (A) to (C) or in any other steps.

The viscosity of the egg-like food is not particularly limited. In a case where the egg-like food is in a liquid state, the B-type viscosity is preferably 1,000 to 5,000 mPa·s. A method for measuring the B-type viscosity may be a known method, and as an example of a measuring unit, a TVB-10 type viscometer (manufactured by Toki Sangyo Co., Ltd.) is used, and the measurement is performed under conditions of 20°C and a rotation speed of 12 rpm after 60 seconds from the start.

The cholesterol content of the egg-like food is not particularly limited, but is preferably 3% by mass or less, more preferably 1% by mass or less, and still more preferably 0% by mass. A method for measuring the cholesterol content may be a known method.

The soluble solid content (hereinafter, also referred to as "Brix") of the egg-like food is not particularly limited, but is preferably 4 or more and 20 or less. In addition, a method for measuring the Brix may be a known method, and examples of a measuring unit include an optical refractometer (NAR-3T, manufactured by ATAGO CO., LTD.).

The pH of the egg-like food is not particularly limited, but is preferably 5.0 or more and 7.0 or less and more preferably 5.5 or more and 6.5 or less from the viewpoint of the taste.

### [Examples]

The present invention will be described in more detail with reference to Examples and Comparative Examples, but the present invention is not limited to these Examples.

### [Example 1]

### (Production of gel-like material)

All the following raw materials 1 to 8 were put into a mixer (multi-quick hand blender MQ500, manufactured by BRAUN) and mixed for 30 seconds to obtain a liquid preparation containing sodium alginate in an emulsified state.

**[Table 1]**

| Blending table of liquid preparation | | |
|---|---|---|
| No | Raw material | Used amount (g) |
| 1 | Carrot puree | 60.0 |
| 2 | Nutritional yeast | 1.4 |
| 3 | Sodium alginate | 1.2 |
| 4 | Xanthan gum | 0.4 |
| 4 | Rapeseed oil | 12.0 |
| 5 | Trehalose | 14.0 |
| 6 | Yeast extract | 0.4 |
| 7 | Egg flavor | 0.2 |
| 8 | Water | 111.0 |
| | Total | 200.6 |

The concentration of the sodium alginate in the obtained liquid preparation was 0.6% by mass.

The obtained liquid preparation was heated, the heating was stopped when the temperature reached 85°C, and the liquid preparation was cooled with ice water. After the liquid preparation was cooled to 10°C or lower, the liquid preparation was spread thinly in a pot, and a 0.5 mass% calcium lactate aqueous solution prepared in advance was slowly added to the pot to cover the liquid preparation to cause a gelation reaction.

Next, the mixture was slowly stirred with a rubber spatula, and the gel was broken into an appropriate size. Thereafter, the calcium lactate aqueous solution was washed away with water so that the gel was not crushed, and the water was drained well to obtain a gel-like material.

### (Production of egg yolk-like liquid)

In the same manner as described above, all the raw materials 1 to 8 were put into a mixer (multi-quick hand blender MQ500, manufactured by BRAUN) and mixed for 30 seconds to obtain a liquid preparation containing sodium alginate in an emulsified state.

The obtained liquid preparation was heated, and the heating was stopped when the temperature reached 85°C, and the liquid preparation was cooled with ice water, thereby obtaining an egg yolk-like liquid.

### (Production of scrambled egg-like food)

80 g of the gel-like material obtained as described above and 20 g of the egg yolk-like liquid were mixed (mass ratio of 4:1) to obtain a scrambled egg-like food. The obtained scrambled egg-like food had the texture, tint, and flavor that were extremely similar to (or the same as) those of scrambled eggs using real eggs, and had excellent quality.

### [Examples 2 to 5]

Each scrambled egg-like food was obtained by the same method as in Example 1 except that the concentrations of sodium alginate and calcium lactate were changed to the concentrations listed in the following table.

**[Table 2]**

| | Concentration of Na alginate (mass%) | Concentration of Ca lactate (mass%) |
|---|---|---|
| Example 2 | 0.8 | 0.5 |
| Example 3 | 1.0 | 0.5 |
| Example 4 | 1.2 | 0.5 |
| Example 5 | 1.5 | 0.5 |

Each of the obtained scrambled egg-like foods had the texture, tint, and flavor that were extremely similar to (or the same as) those of scrambled eggs using real eggs, and had excellent quality.

### [Examples 6 to 8]

Each scrambled egg-like food was obtained by the same method as in Example 1 except that the amount of the rapeseed oil used in the production of the liquid preparation was changed to the concentration listed in the following table.

**[Table 3]**

| | Amount of rapeseed oil used (g) |
|---|---|
| Example 6 | 8.0 |
| Example 7 | 16.0 |
| Example 8 | 24.0 |

The scrambled egg-like food of Example 6 had no richness and had a slightly inferior flavor. On the other hand, in the scrambled egg-like food of Example 7, the progress of emulsification was slow with only sodium alginate, but emulsification was confirmed by adding xanthan gum. The scrambled egg-like food of Example 8 had an extremely strong oil taste and thus had a slightly inferior flavor.

### [Example 9]

Egg-like foods having various shapes such as a hot spring egg-like food, a fried egg-like food, an omelet-like food, and a boiled egg-like food were produced by changing the mixing ratio between the gel-like material and the egg yolk-like liquid obtained in Example 1.

### [Comparative Example and Examples 10 to 20]

Each scrambled egg-like food was produced by the same method as in Example 1 except that the blending of raw materials was changed as listed in Table 4 below, and the concentrations of sodium alginate and calcium lactate were changed as listed in Table 5.

The evaluation was carried out by evaluating the sample having the same shape and texture as the scrambled egg as "A", the sample having a shape and texture slightly harder or softer than the scrambled egg but within an allowable range as "B", and the sample having a shape and texture different from the scrambled egg as "C".

**[Table 4]**

| No | Raw material | Used amount (g/100 ml) |
|---|---|---|
| 1 | Concentrated carrot juice (Brix 50) | 4.0 |
| 2 | White kidney bean puree manufactured by Kagome Co., Ltd.) | 5.0 |
| 3 | Sodium alginate | Adjusted by classification |
| 4 | Thickening stabilizer (Tamarind) | 0.4 |
| 5 | Edible oil | 10.0 |
| 6 | Trehalose | 5.0 |
| 7 | Yeast extract | 0.2 |
| 8 | Pea protein | 1.1 |
| 9 | Water | Remaining amount |

**[Table 5]**

| Classification | Concentration of Na alginate (mass%) | Concentration of Ca lactate (mass%) | Evaluation |
|---|---|---|---|
| Comparative Example 1 | 0.3 | 2.0 | C |
| Example 10 | 0.4 | 2.0 | A |
| Example 11 | 0.6 | 2.0 | A |
| Example 12 | 1.5 | 2.0 | A |
| Example 13 | 3.0 | 2.0 | A |
| Comparative Example 2 | 4.0 | 2.0 | C |
| Example 14 | 0.4 | 0.7 | B |
| Example 15 | 0.4 | 5.0 | A |
| Example 16 | 0.5 | 0.6 | A |
| Example 17 | 0.5 | 1.0 | A |
| Example 18 | 0.6 | 0.5 | A |
| Example 19 | 3.0 | 0.5 | B |
| Example 20 | 3.0 | 5.0 | B |

### (Evaluation comment of each sample)

In Comparative Example 1, the concentration of the alginic acid was low, and a gel was not sufficiently formed. In Examples 10 to 13, a scrambled egg-like gel was formed due to an increase in concentration of alginic acid. In Comparative Example 2, since the concentration of alginic acid was high and the gel forming ability was strong, the texture of the scrambled eggs was extremely hard. In Example 14, the properties were slightly loose, but were acceptable as scrambled eggs. In Examples 15 to 18, the concentrations of alginic acid and calcium were in the appropriate ranges, and a scrambled egg-like gel was formed. In Examples 19 and 20, the texture was slightly hard due to the high concentration of alginic acid or calcium, but was acceptable as scrambled eggs.

## Claims

1. A production method of an egg-like food, comprising:
a step (A) of obtaining a gel-like material by mixing a liquid preparation containing alginic acids and a calcium salt aqueous solution and gelling the mixture,
wherein a concentration of the alginic acids is in a range of 0.1% to 10.0% by mass with respect to the liquid preparation, and a concentration of the calcium salt aqueous solution is in a range of 0.1% to 5.0% by mass.

2. The production method of an egg-like food according to Claim 1,
wherein the calcium salt aqueous solution is gradually added to the liquid preparation containing the alginic acids.

3. The production method of an egg-like food according to Claim 1 or 2,
wherein the alginic acids are any one or more selected from the group consisting of sodium alginate, potassium alginate, and ammonium alginate.

4. The production method of an egg-like food according to Claim 1 or 2,
wherein the calcium salt is any one or more selected from the group consisting of calcium lactate, calcium gluconate, calcium fumarate, calcium citrate, calcium succinate, calcium acetate, calcium chloride, and calcium hydroxide.

5. The production method of an egg-like food according to Claim 1 or 2, further comprising:
a step (B) of adding a plant oil and a vegetable-derived raw material to the liquid preparation and emulsifying the liquid preparation.

6. The production method of an egg-like food according to Claim 5,
wherein the plant oil are any one or more selected from the group consisting of linseed oil, perilla oil, olive oil, grape seed oil, corn oil, sesame oil, rice oil, soybean oil, rapeseed oil, palm oil, sunflower oil, safflower oil, and cottonseed oil.

7. The production method of an egg-like food according to Claim 5,
wherein the vegetable-derived raw material is a processed product of a carotenoid-containing plant.

8. The production method of an egg-like food according to Claim 7,
wherein the carotenoid-containing plant is any one or more selected from the group consisting of carrot, pumpkin, paprika, citrus, and mango.

9. The production method of an egg-like food according to Claim 7,
wherein the processed product of the carotenoid-containing plant is any one or more selected from the group consisting of carrot juice, concentrated carrot juice, carrot pulp, and carrot puree.

10. The production method of an egg-like food according to Claim 1 or 2, further comprising:
a step (C) of mixing the gel-like material obtained in the step (A) and an egg yolk-like liquid.

11. The production method of an egg-like food according to Claim 10,
wherein the egg yolk-like liquid contains a plant oil and a vegetable-derived raw material.

12. The production method of an egg-like food according to Claim 10,
wherein a mixing ratio of the gel-like material and the egg yolk-like liquid is in a range of 0.1:1 to 10:1 (mass ratio).

13. The production method of an egg-like food according to Claim 1 or 2,
wherein the egg-like food is a scrambled egg-like food.

14. An egg-like food comprising:
alginic acids; and
calcium,
wherein the egg-like food has a portion gelled by the alginic acids and the calcium.

15. The egg-like food according to Claim 14, further comprising:
a plant oil; and
a vegetable-derived raw material.

16. The egg-like food according to Claim 15,
wherein the vegetable-derived raw material is emulsified with the plant oil.

17. The egg-like food according to Claim 15 or 16,
wherein the plant oil are any one or more selected from the group consisting of linseed oil, perilla oil, olive oil, grape seed oil, corn oil, sesame oil, rice oil, soybean oil, rapeseed oil, palm oil, sunflower oil, safflower oil, and cottonseed oil.

18. The egg-like food according to Claim 15 or 16,
wherein the vegetable-derived raw material is a processed product of a carotenoid-containing plant.

19. The egg-like food according to Claim 18,
wherein the processed product of the carotenoid-containing plant is any one or more selected from the group consisting of carrot juice, concentrated carrot juice, carrot pulp, and carrot puree.
